# EUROPEAN PATENT SPECIFICATION

(11) **EP 4 353 527 B1**
(45) Date of publication and mention of the grant of the patent: **24.12.2025**
(21) Application number: 23185020.7
(22) Date of filing: 12.07.2023
(51) Int. Cl.: B60N 2/28

(54) **SAFETY SEAT**
SICHERHEITSSITZ
SIÈGE DE SÉCURITÉ

(30) Priority: 13.10.2022 CN 202222704600 U
(43) Date of publication of application: 17.04.2024
(73) Proprietor: Ningbo Baby First Baby Products Co., Ltd., Ningbo, Zhejiang 315412 (CN)
(72) Inventor: CHANG, Jian, Ningbo, Zhejiang, 315412 (CN); GUO, Yaya, Ningbo, Zhejiang, 315412 (CN)
(74) Representative: Santarelli

(56) References cited:
- DE-U1- 202022 100 380
- US-A- 5 344 213
- US-A1- 2016 114 705

## Description

### Technical Field

The present invention relates to the technical field of seats, and in particular to a safety seat.

### Background Art

When mounting a safety seat, it is difficult for a seat back of the safety seat to be perfectly fitted to a vehicle seat due to a fixed angle of the seat back. In addition, if the adjustment of the safety seat can be operated only on its back portion, then when the safety seat is mounted on the vehicle seat, it is impossible to access the back portion and operate the angle of the seat back. Similarly, if the seat angle can be adjusted only at the front of the seat back, it is also impossible to access the front and operate the angle adjustment for the seat back when a child is seated.

Patent document US 5 344 213 A discloses an infant-restraining protective seat of the type placed upon and secured to a seat in a vehicle such as an automobile or airplane and adapted to restrain and protect a seated infant by infant-restraining protecting means such as a seat belt device for infants.

### Summary

The invention is set out in the appended set of claims.

An object of the present invention is to provide a safety seat to alleviate the technical problems in the prior art that the angle of the seat back is inconvenient to adjust, and it is difficult to be perfectly fitted to a vehicle seat.

In a first aspect, the safety seat provided by the present invention includes: a base, a seat back, a locking member, a linkage member and a lock driving member, wherein
the seat back is hinged to the base, and the seat back is provided with lock holes adapted to the locking member; and
the locking member is movably connected to the base, the lock driving member is mounted on the base, and the lock driving member is in transmission connection with the locking member via the linkage member.

In connection with the first aspect, the present invention provides a first possible embodiment of the first aspect, wherein the lock driving member includes a handle device, the handle device being slidably connected to the base, and the handle device being in transmission connection with the linkage member.

In connection with the first possible embodiment of the first aspect, the present invention provides a second possible embodiment of the first aspect, wherein the handle device is mounted inside the base, and the handle device is provided with a first hand-touch portion; and
the base is provided with a first operation port on its back portion, and the first operation port is opposite the first hand-touch portion.

In connection with the first possible embodiment of the first aspect, the present invention provides a third possible embodiment of the first aspect, wherein the base is provided with a second operation port on its front side, and the second operation port is opposite the handle device.

In connection with the third possible embodiment of the first aspect, the present invention provides a fourth possible embodiment of the first aspect, wherein the handle device is provided with a second hand-touch portion, and the second hand-touch portion is slidable in the second operation port.

In connection with the first possible embodiment of the first aspect, the present invention provides a fifth possible embodiment of the first aspect, wherein the lock driving member further includes a reset elastic member, wherein the reset elastic member is connected between the handle device and the base, and the reset elastic member is used for driving the handle device to reset, so that the locking member is locked to the seat back.

In connection with the first aspect, the present invention provides a sixth possible embodiment of the first aspect, wherein the locking member includes: a first lock pin and a second lock pin, each of the first lock pin and the second lock pin being slidably connected to the base, and each of the first lock pin and the second lock pin being in transmission connection with the linkage member.

In connection with the sixth possible embodiment of the first aspect, the present invention provides a seventh possible embodiment of the first aspect, wherein the linkage member includes: a first link rod and a second link rod, the first link rod and the second link rod being connected to the first lock pin and the second lock pin in one-to-one correspondence, and each of the first link rod and the second link rod being in transmission connection with the lock driving member.

In connection with the first aspect, the present invention provides an eighth possible embodiment of the first aspect, wherein the seat back is hinged to the base by rotating shafts.

In connection with the first aspect, the present invention provides a ninth possible embodiment of the first aspect, wherein the base is provided with a protrusion, the seat back is provided with a first lateral arm and a second lateral arm, the first lateral arm and the second lateral arm are spaced apart from each other, and the protrusion is mounted between the first lateral arm and the second lateral arm.

The embodiments of the present invention have brought the following beneficial effects: the seat back is hinged to the base, the seat back is provided with the lock holes adapted to the locking member, the locking member is movably connected to the base, the lock driving member is mounted on the base, and the lock driving member is in transmission connection with the locking member via the linkage member, so that it is easy to adjust the angle of the seat back, and it can ensure that the seat back can be tightly fitted to a vehicle seat after the safety seat is mounted.

In order to make the above-mentioned objects, features and advantages of the present invention more obvious and easy to understand, preferred embodiments are given below, and are detailed as follows in conjunction with the accompanying drawings.

### Brief Description of the Drawings

In order to more clearly illustrate the technical solutions in specific embodiments of the present invention or related technologies, the accompanying drawings that need to be used in the descriptions of the specific embodiments or related technologies are briefly introduced in the following. Obviously, the drawings in the following description are some embodiments of the present invention, and for those of ordinary skill in the art, other drawings can also be obtained from these drawings without involving any inventive effort.
FIG. 1 is an exploded view of a safety seat according to an embodiment of the present invention;
FIG. 2 is a first partial schematic diagram of the safety seat according to an embodiment of the present invention;
FIG. 3 is a second partial schematic diagram of the safety seat according to an embodiment of the present invention;
FIG. 4 is a left view of the safety seat according to an embodiment of the present invention in an unfolded state;
FIG. 5 is a partial sectional view of the safety seat according to an embodiment of the present invention in a locked state;
FIG. 6 is a left view of the safety seat according to an embodiment of the present invention in a folded state; and
FIG. 7 is a partial sectional view of the safety seat according to an embodiment of the present invention in an unlocked state.

List of reference signs: 100 - Base; 101 - First operation port; 102 - Second operation port; 103 - Protrusion; 200 - Seat back; 201 - Lock hole; 210 - First lateral arm; 220 - Second lateral arm; 300 - Locking member; 310 - First lock pin; 320 - Second lock pin; 400 - Linkage member; 410 - First link rod; 420 - Second link rod; 500 - Lock driving member; 510 - Handle device; 511 - First hand-touch portion; 512 - Second hand-touch portion; 520 - Reset elastic member; 600 - Rotating shaft.

### Detailed Description of Embodiments

The technical solutions of the present invention will be clearly and completely described below with reference to the accompanying drawings. Obviously, the described embodiments are some of, rather than all of, the embodiments of the present invention. On the basis of the embodiments of the present invention, all other embodiments obtained by those of ordinary skill in the art without involving any inventive effort shall fall within the scope of protection of the present invention.

In the description of the present invention, it should be noted that an orientation or positional relationship indicated by the term "center", "upper", "lower", "left", "right", "vertical", "horizontal", "inner", "outer", or the like is based on the orientation or positional relationship shown in the accompanying drawings, which is only for convenience of describing the present invention and simplifying the description, rather than indicating or implying that the referred device or element must have a particular orientation, be constructed and operated in a particular orientation, and therefore should not be construed as limiting the present invention. In addition, the terms "first", "second" and "third" are for descriptive purposes only and should not be construed as indicating or implying relative importance. The physical quantity in the formula, if not marked separately, should be understood as a basic quantity of a basic unit of The International System of Units, or a derived quantity derived from the basic quantity through mathematical operations such as multiplication, division, differentiation or integration.

In the description of the present invention, it should be noted that unless otherwise explicitly specified and defined, terms "mounting", "connecting" and "connection" should be understood in a broad sense, for example, they can be a fixed connection, a detachable connection, or an integrated connection; or may be a mechanical connection or an electrical connection; or may be a direct connection, an indirect connection by means of an intermediate medium, or internal communication between two elements. For those of ordinary skill in the art, the specific meaning of the terms mentioned above in the present invention should be construed in specific situations.

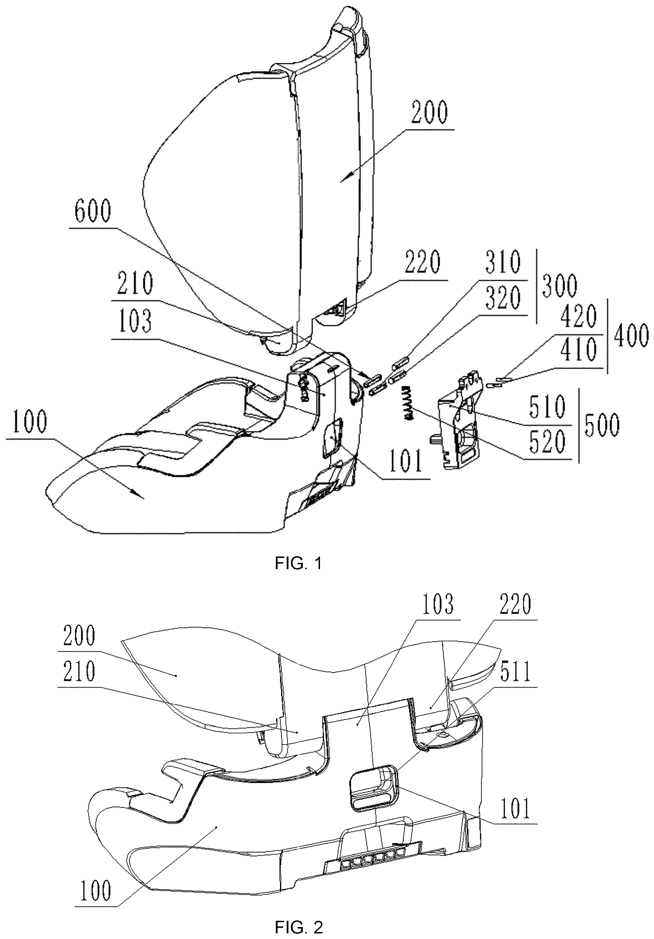

As shown in FIG. 1, a safety seat provided by an embodiment of the present invention includes: a base 100, a seat back 200, a locking member 300, a linkage member 400 and a lock driving member 500. The seat back 200 is hinged to the base 100, and the seat back 200 is provided with lock holes 201 adapted to the locking member 300. The locking member 300 is movably connected to the base 100, the lock driving member 500 is mounted on the base 100, and the lock driving member 500 is in transmission connection with the locking member 300 via the linkage member 400.

The lock driving member 500 drives the locking member 300 via the transmission of the linkage member 400, and thus a reciprocating switch between a locked state and an unlocked state can be realized, so that it is easy to adjust the angle of the seat back 200, and it can ensure that the seat back 200 can be tightly fitted to a vehicle seat after the safety seat is mounted.

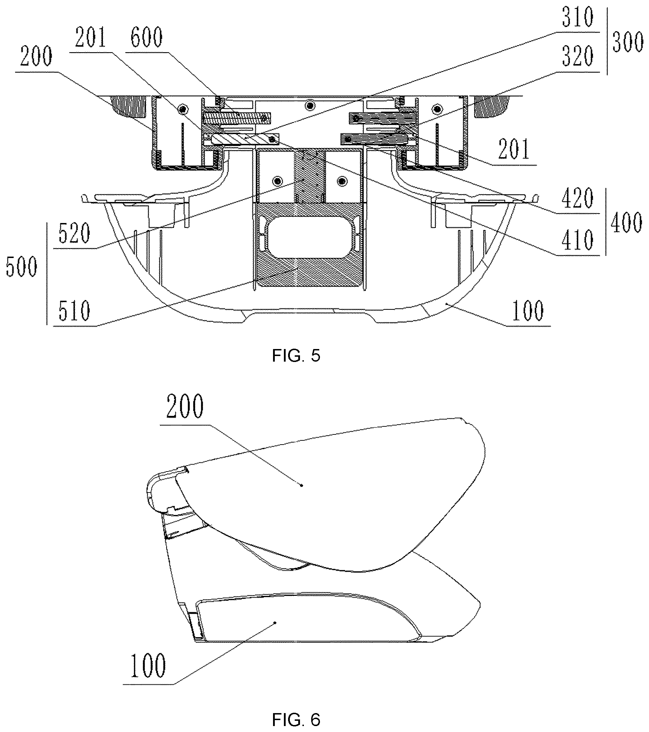

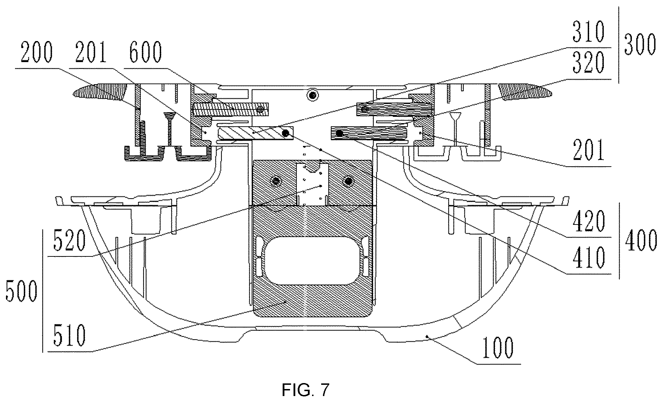

As shown in FIGS. 1, 5 and 7, in an embodiment of the present invention, the lock driving member 500 includes a handle device 510. The handle device 510 is slidably connected to the base 100, and the handle device 510 is in transmission connection with the linkage member 400. The handle device 510 is embedded into the base 100, and the handle device 510 is slidable relative to the base 100, thereby facilitating manual operation.

As shown in FIGS. 1, 2, 5 and 7, the handle device 510 is mounted inside the base 100, and the handle device 510 is provided with a first hand-touch portion 511. The base 100 is provided with a first operation port 101 on its back portion, and the first operation port 101 is opposite the first hand-touch portion 511.

When an occupant is seated in a seating area of the safety seat, an operator can touch the first hand-touch portion 511 from the rear of the safety seat via the first operation port 101, and then the handle device 510 can be operated to slide relative to the base 100.

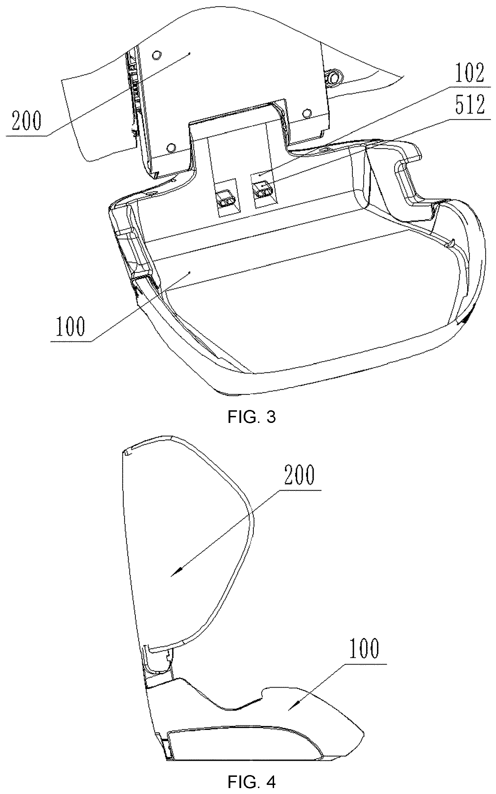

As shown in FIGS. 1, 3, 5 and 7, the base 100 is provided with a second operation port 102 on its front side, and the second operation port 102 is opposite the handle device 510. The handle device 510 can be touched through the second operation port 102. Under the condition of no occupant, the handle device 510 can be operated through the second operation port 102 to adjust the seat back 200, thereby enabling the seat back 200 of the safety seat mounted on a vehicle to be better fitted to the vehicle's seat.

Further, the handle device 510 is provided with a second hand-touch portion 512, the second hand-touch portion 512 is inserted into second operation port 102, and the second hand-touch portion 512 is slidable in the second operation port 102. Thus, when the safety seat is mounted on the vehicle seat, the second hand-touch portion 512 can be operated in front of the safety seat to slide the handle device 510 relative to the base 100, thereby realizing an unlocking operation of the locking member 300.

As shown in FIGS. 1, 5 and 7, the lock driving member 500 further includes a reset elastic member 520. The reset elastic member 520 is connected between the handle device 510 and the base 100, and the reset elastic member 520 is used for driving the handle device 510 to reset, so that the locking member 300 is locked to the seat back 200. The reset elastic member 520 drives the handle device 510 to reset, so that the handle device 510 drives the locking member 300 to reach the locked state via the transmission of the linkage member 400.

As shown in FIGS. 1, 4, 5, 6 and 7, the locking member 300 includes: a first lock pin 310 and a second lock pin 320. Each of the first lock pin 310 and the second lock pin 320 is slidably connected to the base 100, and each of the first lock pin 310 and the second lock pin 320 is in transmission connection with the linkage member 400.

In an upright state of the seat back 200, the first lock pin 310 and the second lock pin 320 are inserted into the lock holes 201 of the seat back 200, respectively, to lock the seat back 200. When the handle device 510 is manually operated, the handle device 510 drives the first lock pin 310 and the second lock pin 320 out of the lock holes 201 via the transmission of the linkage member 400. In this case, the seat back 200 can swing around rotating shafts 600 to adjust the angle of the seat back 200.

Further, the linkage member 400 includes: a first link rod 410 and a second link rod 420. The first link rod 410 and the second link rod 420 are connected to the first lock pin 310 and the second lock pin 320 in one-to-one correspondence, and each of the first link rod 410 and the second link rod 420 is in transmission connection with the lock driving member 500.

In one possible embodiment, the first link rod 410 and the second link rod 420 are hinged to the first lock pin 310 and the second lock pin 320 in one-to-one correspondence, so that the first lock pin 310 and the second lock pin 320 can be linked by the first link rod 410 and the second link rod 420.

In another possible embodiment, the first link rod 410 and the second link rod 420 are connected to the first lock pin 310 and the second lock pin 320 in one-to-one correspondence by flexible shafts. Thus, the first link rod 410 and the second link rod 420 can transmit pulling force, so that the first lock pin 310 and the second lock pin 320 can be pulled to unlock. Under the action of the reset elastic member 520, the handle device 510 drives the first link rod 410 and the second link rod 420 to reset, during which the flexible shafts push the first lock pin 310 and the second lock pin 320 to reset to the locked state.

In order to achieve multi-angle adjustment and locking of the seat back 200, a plurality of lock holes 201 may be provided, and the plurality of lock holes 201 are disposed at intervals around the rotating shaft 600 of the seat back 200, so that the seat back 200 can be locked at any angle position.

Further, the seat back 200 is hinged to the base 100 by rotating shafts 600, and two rotating shafts 600 are disposed coaxially. The seat back 200 is hinged to the base 100 by means of the two rotating shafts 600, ensuring that the inclination of the seat back 200 is smoothly adjusted, and facilitating the assembly of the seat back 200 with the base 100.

As shown in FIGS. 1 and 2, the base 100 is provided with a protrusion 103, the seat back 200 is provided with a first lateral arm 210 and a second lateral arm 220, the first lateral arm 210 and the second lateral arm 220 are spaced apart from each other, and the protrusion 103 is mounted between the first lateral arm 210 and the second lateral arm 220.

Specifically, the two rotating shafts 600 are inserted into the first lateral arm 210 and the second lateral arm 220 in one-to-one correspondence, and both the two rotating shafts 600 are inserted into the protrusion 103, so that compact assembly of the seat back 200 relative to the base 100 is realized by embedding the protrusion 103 between the first lateral arm 210 and the second lateral arm 220,.

Finally, it should be noted that the foregoing embodiments are only used to illustrate the technical solutions of the present invention, but not to limit them; although the present invention has been described in detail with reference to the foregoing embodiments, those of ordinary skill in the art should understand that it is still possible to modify the technical solutions described in the foregoing embodiments, or perform equivalent substitutions for some or all of the technical features therein.

## Claims

1. A safety seat, **characterized by** comprising: a base (100), a seat back (200), a locking member (300), a linkage member (400) and a lock driving member (500), wherein
the seat back (200) is hinged to the base (100), and the seat back (200) is provided with lock holes (201) adapted to the locking member (300); and
the locking member (300) is movably connected to the base (100), the lock driving member (500) is mounted on the base (100), and the lock driving member (500) is in transmission connection with the locking member (300) via the linkage member (400);
the lock driving member (500) comprises a handle device (510), the handle device (510) being slidably connected to the base (100), and the handle device (510) being in transmission connection with the linkage member (400);
**characterized in that** the base (100) is provided with a second operation port (102) on its front side, and the second operation port (102) is opposite the handle device (510) which is accessible through the second operation port (102).

2. The safety seat according to claim 1, **characterized in that** the handle device (510) is mounted inside the base (100), and the handle device (510) is provided with a first hand-touch portion (511); and
the base (100) is provided with a first operation port (101) on its back portion, and the first operation port (101) is opposite the first hand-touch portion (511) which is accessible through the first operation port (101).

3. The safety seat according to claim 1, **characterized in that** the handle device (510) is provided with a second hand-touch portion (512), and the second hand-touch portion (512) is slidable in the second operation port (102).

4. The safety seat according to claim 1, **characterized in that** the lock driving member (500) further comprises a reset elastic member (520), wherein the reset elastic member (520) is connected between the handle device (510) and the base (100), and the reset elastic member (520) is used for driving the handle device (510) to reset, so that the locking member (300) is locked to the seat back (200).

5. The safety seat according to claim 1, **characterized in that** the locking member (300) comprises:
a first lock pin (310) and a second lock pin (320), each of the first lock pin (310) and the second lock pin (320) being slidably connected to the base (100), and each of the first lock pin (310) and the second lock pin (320) being in transmission connection with the linkage member (400).

6. The safety seat according to claim 5, **characterized in that** the linkage member (400) comprises:
a first link rod (410) and a second link rod (420), the first link rod (410) and the second link rod (420) being connected to the first lock pin (310) and the second lock pin (320) in one-to-one correspondence, and each of the first link rod (410) and the second link rod (420) being in transmission connection with the lock driving member (500).

7. The safety seat according to claim 1, **characterized in that** the seat back (200) is hinged to the base (100) by rotating shafts (600).

8. The safety seat according to claim 1, **characterized in that** the base (100) is provided with a protrusion (103), the seat back (200) is provided with a first lateral arm (210) and a second lateral arm (220), the first lateral arm (210) and the second lateral arm (220) are spaced apart from each other, and the protrusion (103) is mounted between the first lateral arm (210) and the second lateral arm (220).

## Patentansprüche

1. Sicherheitssitz, **dadurch gekennzeichnet, dass** er umfasst: einen Sockel (100), eine Sitzrückenlehne (200), ein Verriegelungselement (300), ein Gestängeelement (400) und ein Verriegelungsantriebselement (500), wobei
die Sitzrückenlehne (200) an dem Sockel (100) angeschlagen ist, und die Sitzrückenlehne (200) mit Verriegelungslöchern (201) bereitgestellt ist, die dem Verriegelungselement (300) angepasst sind; und
das Verriegelungselement (300) beweglich mit dem Sockel (100) verbunden ist, das Verriegelungsantriebselement (500) am Sockel (100) montiert ist und das Verriegelungsantriebselement (500) über das Gestängeelement (400) mit dem Verriegelungselement (300) in Übertragungsverbindung steht;
das Verriegelungsantriebselement (500) eine Griffvorrichtung (510) umfasst, wobei die Griffvorrichtung (510) verschiebbar mit dem Sockel (100) verbunden ist und die Griffvorrichtung (510) in Übertragungsverbindung mit dem Gestängeelement (400) steht;
**dadurch gekennzeichnet, dass** der Sockel (100) an seiner Vorderseite mit einem zweiten Betriebsanschluss (102) bereitgestellt ist, und der zweite Betriebsanschluss (102) gegenüber der Griffvorrichtung (510) liegt, die durch den zweiten Betriebsanschluss (102) zugänglich ist.

2. Sicherheitssitz nach Anspruch 1, **dadurch gekennzeichnet, dass** die Griffvorrichtung (510) innerhalb des Sockels (100) montiert ist und die Griffvorrichtung (510) mit einem ersten Handberührungsabschnitt (511) bereitgestellt ist; und
der Sockel (100) an seinem hinteren Abschnitt mit einem ersten Betriebsanschluss (101) bereitgestellt ist, und der erste Betriebsanschluss (101) gegenüber dem ersten Handberührungsabschnitt (511) liegt, der durch den ersten Betriebsanschluss (101) zugänglich ist.

3. Sicherheitssitz nach Anspruch 1, **dadurch gekennzeichnet, dass** die Griffvorrichtung (510) mit einem zweiten Handberührungsabschnitt (512) bereitgestellt ist und der zweite Handberührungsabschnitt (512) in dem zweiten Betriebsanschluss (102) verschiebbar ist.

4. Sicherheitssitz nach Anspruch 1, **dadurch gekennzeichnet, dass** das Verriegelungsantriebselement (500) weiter ein elastisches Rückstellelement (520) umfasst, wobei das elastische Rückstellelement (520) zwischen der Griffvorrichtung (510) und dem Sockel (100) verbunden ist, und das elastische Rückstellelement (520) verwendet wird, um die Griffvorrichtung (510) zum Zurückstellen anzutreiben, sodass das Verriegelungselement (300) an der Sitzrückenlehne (200) verriegelt ist.

5. Sicherheitssitz nach Anspruch 1, **dadurch gekennzeichnet, dass** das Verriegelungselement (300) umfasst: einen ersten Verriegelungsstift (310) und einen zweiten Verriegelungsstift (320), wobei jeder von dem ersten Verriegelungsstift (310) und dem zweiten Verriegelungsstift (320) verschiebbar mit dem Sockel (100) verbunden ist, und jeder von dem ersten Verriegelungsstift (310) und dem zweiten Verriegelungsstift (320) in Übertragungsverbindung mit dem Gestängeelement (400) steht.

6. Sicherheitssitz nach Anspruch 5, **dadurch gekennzeichnet, dass** das Gestängeelement (400) umfasst: eine erste Gelenkstange (410) und eine zweite Gelenkstange (420), wobei die erste Gelenkstange (410) und die zweite Gelenkstange (420) mit dem ersten Verriegelungsstift (310) und dem zweiten Verriegelungsstift (320) in Eins-zu-Eins-Entsprechung verbunden sind und jede von der ersten Gelenkstange (410) und der zweiten Gelenkstange (420) in Übertragungsverbindung mit dem Verriegelungsantriebselement (500) steht.

7. Sicherheitssitz nach Anspruch 1, **dadurch gekennzeichnet, dass** die Sitzrückenlehne (200) durch drehende Wellen (600) an dem Sockel (100) angeschlagen ist.

8. Sicherheitssitz nach Anspruch 1, **dadurch gekennzeichnet, dass** der Sockel (100) mit einem Vorsprung (103) bereitgestellt ist, die Sitzrückenlehne (200) mit einem ersten seitlichen Arm (210) und einem zweiten seitlichen Arm (220) bereitgestellt ist, der erste seitliche Arm (210) und der zweite seitliche Arm (220) voneinander beabstandet sind und der Vorsprung (103) zwischen dem ersten seitlichen Arm (210) und dem seitlichen Arm (220) montiert ist.

## Revendications

1. Siège de sécurité, **caractérisé en ce qu'**il comprend :
une base (100), un dossier de siège (200), un organe de verrouillage (300), un organe de liaison (400) et un organe d'entraînement de verrouillage (500), dans lequel
le dossier de siège (200) est articulé à la base (100), et le dossier de siège (200) est doté de trous de verrouillage (201) adaptés à l'organe de verrouillage (300) ; et
l'organe de verrouillage (300) est relié de façon mobile à la base (100), l'organe d'entraînement de verrouillage (500) est monté sur la base (100), et l'organe d'entraînement de verrouillage (500) est en liaison de transmission avec l'organe de verrouillage (300) via l'organe de liaison (400) ;
l'organe d'entraînement de verrouillage (500) comprend un dispositif de poignée (510), le dispositif de poignée (510) étant relié de façon coulissante à la base (100), et le dispositif de poignée (510) étant en liaison de transmission avec l'organe de liaison (400) ;
**caractérisé en ce que** la base (100) est dotée d'un second orifice d'actionnement (102) sur sa face avant, et le second orifice d'actionnement (102) est opposé au dispositif de poignée (510) qui est accessible par le biais du second orifice d'actionnement (102).

2. Siège de sécurité selon la revendication 1, **caractérisé en ce que** le dispositif de poignée (510) est monté à l'intérieur de la base (100), et le dispositif de poignée (510) est doté d'une première partie de contact manuel (511) ; et
la base (100) est dotée d'un premier orifice d'actionnement (101) sur sa partie arrière, et le premier orifice d'actionnement (101) est opposé à la première partie de contact manuel (511) qui est accessible par le biais du premier orifice d'actionnement (101).

3. Siège de sécurité selon la revendication 1, **caractérisé en ce que** le dispositif de poignée (510) est doté d'une seconde partie de contact manuel (512), et la seconde partie de contact manuel (512) est coulissante dans le second orifice d'actionnement (102).

4. Siège de sécurité selon la revendication 1, **caractérisé en ce que** l'organe d'entraînement de verrouillage (500) comprend en outre un organe élastique de réinitialisation (520), dans lequel l'organe élastique de réinitialisation (520) est relié entre le dispositif de poignée (510) et la base (100), et l'organe élastique de réinitialisation (520) est utilisé pour entraîner le dispositif de poignée (510) pour sa réinitialisation, de sorte que l'organe de verrouillage (300) soit verrouillé au dossier de siège (200).

5. Siège de sécurité selon la revendication 1, **caractérisé en ce que** l'organe de verrouillage (300) comprend : une première broche de verrouillage (310) et une seconde broche de verrouillage (320), chacune de la première broche de verrouillage (310) et de la seconde broche de verrouillage (320) étant reliées de manière coulissante à la base (100), et chacune de la première broche de verrouillage (310) et de la seconde broche de verrouillage (320) étant en liaison de transmission avec l'organe de liaison (400).

6. Siège de sécurité selon la revendication 5, **caractérisé en ce que** l'organe de liaison (400) comprend : une première tige de liaison (410) et une seconde tige de liaison (420), la première tige de liaison (410) et la seconde tige de liaison (420) étant reliées à la première broche de verrouillage (310) et à la seconde broche de verrouillage (320) en correspondance biunivoque, et chacune de la première tige de liaison (410) et de la seconde tige de liaison (420) étant en liaison de transmission avec l'organe d'entraînement de verrouillage (500).

7. Siège de sécurité selon la revendication 1, **caractérisé en ce que** le dossier de siège (200) est articulé à la base (100) par des arbres rotatifs (600).

8. Siège de sécurité selon la revendication 1, **caractérisé en ce que** la base (100) est dotée d'une saillie (103), le dossier de siège (200) est doté d'un premier bras latéral (210) et d'un second bras latéral (220), le premier bras latéral (210) et le second bras latéral (220) sont espacés l'un de l'autre, et la saillie (103) est montée entre le premier bras latéral (210) et le second bras latéral (220).
